# EUROPÄISCHE PATENTSCHRIFT

(11) **EP 1 964 475 B1**
(45) Veröffentlichungstag und Bekanntmachung des Hinweises auf die Patenterteilung: **03.06.2015**
(21) Anmeldenummer: 08151830.0
(22) Anmeldetag: 22.02.2008
(51) Int. Cl.: A22C 11/12, A22C 15/00

(54) **Vorrichtung zur Befestigung einer Aufhängeschlaufe**
Device for the fixation of a hanging strap
Dispositif de fixation d'une bride de suspension

(30) Priorität: 27.02.2007 DE 102007009782
(43) Veröffentlichungstag der Anmeldung: 03.09.2008
(73) Patentinhaber: Poly-clip System GmbH & Co. KG, 65795 Hattersheim (DE)
(72) Erfinder: Zurwieden, Martin, 48336, Sassenberg (DE)
(74) Vertreter: Eisenführ Speiser

(56) Entgegenhaltungen:
- EP-A- 0 144 947
- DE-A1- 1 507 943
- DE-A1- 2 132 456
- DE-A1- 2 234 434
- DE-A1- 2 505 672
- DE-B1- 2 352 000
- Anlage 1: Prusikknoten
- 'Anlage 2: RANGER Würgehalsband aus starkem Baumwolltau', [Online] Gefunden im Internet: <URL:http://www.belloundmauz.de/print_produ ct_info.php/products_id/544> [gefunden am 2009-08-04]

## Beschreibung

Die Erfindung betrifft eine Vorrichtung zum Befestigen einer Aufhängeschlaufe an einer zum Zopf gerafften Schlauchhülle.

Es ist bekannt, an ihren Enden mit Clips verschlossene Würste dadurch mit einer Aufhängeschlaufe zu versehen, dass während des Verschließvorganges eine vorbereitete Schlaufe in einen der Clips eingelegt und bei dessen Verpressen um den Schlauchhüllenzopf am Clip und damit am Zopf befestigt wird (DE 2 234 434 A1). Die Befestigung der Aufhängeschlaufe am Clip führt insbesondere dann zu Problemen, wenn die Schlauchhülle vor dem Befüllen gewässert werden muss, was namentlich bei der Herstellung bestimmter Wurstsorten der Fall ist. Denn die Schlauchhülle nimmt Wasser auf und vergrößert dadurch das Volumen des Zopfes, um den die Clip-Verpressung erfolgt. Bei anschließenden Behandlungen der aufgehängten Portionspackung (bei Wurst etwa Kochen, Räuchern u. dgl.) entweicht das Wasser auch aus dem Zopf, so dass sich die Schließkraft des Clips verringert. Das ist in der Regel unproblematisch für den Packungsverschluss, jedoch hat sich gezeigt, dass - auch bei anderem Schlauchhüllenmaterial - vor allem große und schwere, an der Aufhängeschlaufe hängende Portionen den Schlauchhüllenzopf aus dem Clip herausziehen, so dass die Portionspackung herunterfällt.

Aus der DE 25 05 672 A1 ist es ferner bekannt, eine Aufhängeschlaufe aus zugeführtem Bindegarn zu formen und in der eingangs angegebenen Weise hinter dem Clip, also zwischen diesem und der eigentlichen Wurst, durch das sogenannte Abbinden mit einem dafür üblichen Knoten am Zopf zu befestigen. Auch diese Befestigungsart der Aufhängeschlaufe kann die abstreifende Mitnahme des Clips während der Schlauchhüllentrocknung im Laufe von an den Füllvorgang anschließenden Behandlungsverfahren nicht verhindern, weil dabei der Reibschluss des Knotens mit dem Zopf verringert wird.

Die Erfindung löst das geschilderte Problem durch eine Vorrichtung gemäß Anspruch 1. Die Befestigung besteht aus einer den Zopf umfassenden Würgeschlinge einer umfänglich geschlossenen Aufhängeschlaufe Im Gegensatz zu einem Abbindeknoten passt sich die Würgeschlinge, die auch als "Klemmknoten" bezeichnet wird, dem sich verändernden Zopfvolumen und damit -durchmesser selbsttätig an, wobei der die Sicherheit der Befestigung bestimmende Reibschluss zwischen der Würgeschlinge und dem Zopf umso größer wird, je schwerer die an der Aufhängeschlaufe hängende Packung ist; damit passt sich auch der Reibschluss selbsttätig der erforderlichen Haltekraft an.

Die Bildung von Klemmknoten ist an sich vielfältig bekannt. Im Zusammenhang mit der Wurstherstellung ist es aus der DE 2 132 456 A1 bekannt, die zu einem Zopf geraffte Schlauchhülle (Kunstdarm) mittels einer so genannten "Fransenschlinge", die der Würgeschlinge entspricht, wie diese zu einem Klemmknoten führt und an einer umfänglich geschlossenen Aufhängeschlaufe ausgebildet ist, abzubinden und dadurch zu verschließen. Wegen des Fehlens eines Clipverschlusses kann sich jedoch der Zopfverschluss öffnen, wenn die Wurst nicht mehr aufgehängt ist und sich der Klemmknoten löst. Der DE 1 507 943 A1 ist ein ähnlicher Klemmknoten zum Festlegen der Fadenenden beim Abbinden des Zopfes zu entnehmen.

Die EP 0 719 707 A1 beschreibt eine Bindemaschine zum Abbinden flexibler Behälter mittels einer Bindeschnur unter Bildung eines Klemmknotens, der jedoch nicht Teil einer geschlossenen Aufhängeschlaufe ist und deshalb auch nicht eine Würgeschlaufe bildet, die unter der Zugspannung des aufgehängten Gewichts steht.

Von besonderer Bedeutung ist, dass die erfindungsgemäße Art der Schlaufenanbringung unter Verwendung einer umfänglich geschlossenen Aufhängeschlaufe deren Befestigung im laufenden Abfüllbetrieb einer Füll- und Verschließmaschine ohne Unterbrechung erlaubt, weil sich die erforderlichen Arbeitsschritte des Befestigungsverfahrens in den Verschließablauf nach Befüllen der jeweils vorhergehenden Schlauchhülle integrieren lässt. Demgemäß besteht das erfindungsgemäße Verfahren zum Befestigen einer Aufhängeschlaufe an einer zum Zopf gerafften Schlauchhülle, insbesondere Wursthülle, darin, dass die in Form eines länglich-schmal aufgespannten Rechtecks geschlossene Schlaufe tangential an den Zopf geführt, dann die Schlaufe nahe einem ersten Rechteckende aus der Tangentialebene auf einer zur Schlauchachse konzentrischen Bahn durchgriffen und von der der Tangentialebene gegenüberliegenden Seite des Zopfes die Schlaufe am anderen, zweiten Rechteckende erfasst wird, worauf dieses zweite Schlaufenende unter Aufrechterhaltung der Aufspannung durch die Schlaufe nahe ihrem ersten Rechteckende gezogen und die so gebildete Würgeschlinge festgezogen wird.

Durch entsprechende Vorkonfektionierung umfänglich geschlossene Aufhängeschlaufen sind an sich bekannt, beispielsweise aus der DE 32 44 775 A1 und der DE 198 15 574 A1. Ihre Befestigung am Wurstzopf erfolgte jedoch bisher mit Hilfe eines Clip, wie dies eingangs beschrieben wurde, oder ohne Clip als einzigem Zopfverschluss (DE 2 132 456 A1).

Eine Vorrichtung zum Befestigen einer Aufhängeschlaufe an einer zum Zopf gerafften Schlauchhülle zeichnet sich dadurch aus, dass auf einer Halterung eine ortsfeste zweizinkige Haltegabel und eine relativ zu dieser und senkrecht zu ihrer Zinkenebene bewegliche zweizinkige Spanngabel sowie ein gekrümmter, einseitig befestigter und auf einem Teilkreis schwenkbarer Schlingfinger angeordnet sind,
wobei die Zinken beider Gabeln im Wesentlichen senkrecht zu einer die Gabeln verbindenden Ebene stehen und die umfänglich geschlossene Aufhängeschlaufe in Form eines länglich-schmalen Rechtecks zwischen sich aufspannen können, welches sich bei Beginn eines Befestigungszyklus' mit beiden Längsschenkeln tangential zum Zopf erstreckt,
und wobei der Schlingfinger eine Hakenspitze hat, die sich bei seiner Schwenkbewegung aus einer Ruhelage auf der dem Zopf gegenüberliegenden Seite der Rechteckschlaufe durch diese nahe ihrem ersten von der Spanngabel gehaltenen Rechteckende hindurch um den Zopf herum zum anderen (zweiten) Rechteckende bewegt, dieses von der Haltegabel löst und es beim Rückschwenken um den Zopf und durch die Aufhängeschlaufe am ersten Rechteckende mitnimmt, so dass eine die Aufhängeschlaufe am Zopf festliegende Würgeschlinge entsteht.

Wird einer solchen Vorrichtung eine Einrichtung zum Zuführen von magazinierten Aufhängeschlaufen zugefügt, dann hat das aus der DE 2 352 000 A1 bekannte Träger-Gurtband eine solche Breite, dass seine sich quer dazu erstreckenden Längsränder nahe den Querschenkeln der Aufhängeschlaufen verlaufen und Schlaufenöffnungen von lediglich zur Einführung von Aufnahmewerkzeugen ausreichender Größe offen lassen, während die Längsschenkel parallelen Abstand voneinander haben, so dass eine sichere Abnahme der Schlaufen vom Gurtband gewährleistet ist.

Bevorzugte Ausgestaltungen sind den auf diesen Vorrichtungsanspruch bezogenen Unteransprüchen entnehmbar.

Die Zeichnungsfiguren veranschaulichen ein Ausführungsbeispiel dieser Vorrichtung. Darin zeigt:
- Figur 1: in perspektivischer Schemadarstellung die wesentlichen Elemente der erfindungsgemäßen Vorrichtung;
- Figur 2: in entsprechend perspektivischer Schemadarstellung einen Ansichtsausschnitt in Richtung des Pfeiles A in Figur 1;
- Figur 3: in Seitenansicht die wesentlichen Elemente des Vorrichtungsteils zur Würgeschlingen-Herstellung vor Beginn eines Arbeitszyklus';
- Figur 4: eine der Figur 3 entsprechende Darstellung nach Aufspannen der Aufhängeschlaufe zwischen den Halte- und Spanngabeln;

- Figur 5: eine der Figur 3 entsprechende Darstellung im Moment der Schlaufenaufnahme durch den Schlingfinger;
- Figur 6: eine der Figur 3 entsprechende Darstellung im Moment der Würgeschlaufen-Bildung;
- Figur 7: eine der Figur 1 entsprechende Darstellung mit der Aufhängeschlaufen-Zuführeinrichtung bei Übergabe einer Aufhängeschlaufe; und
- Figur 8: eine - relativ vergrößerte - Draufsicht auf einen Gurtband-Abschnitt mit Aufhängeschlaufen.

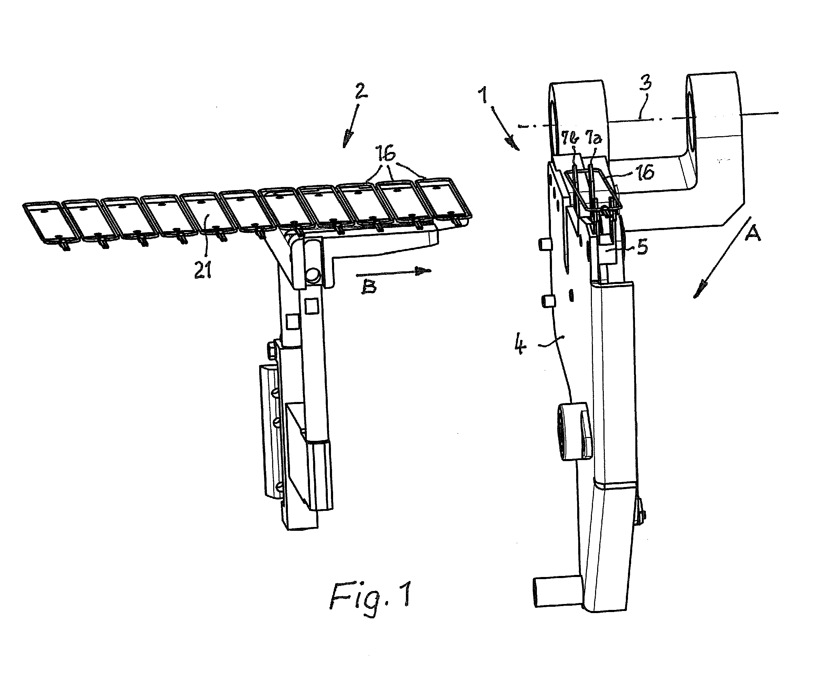

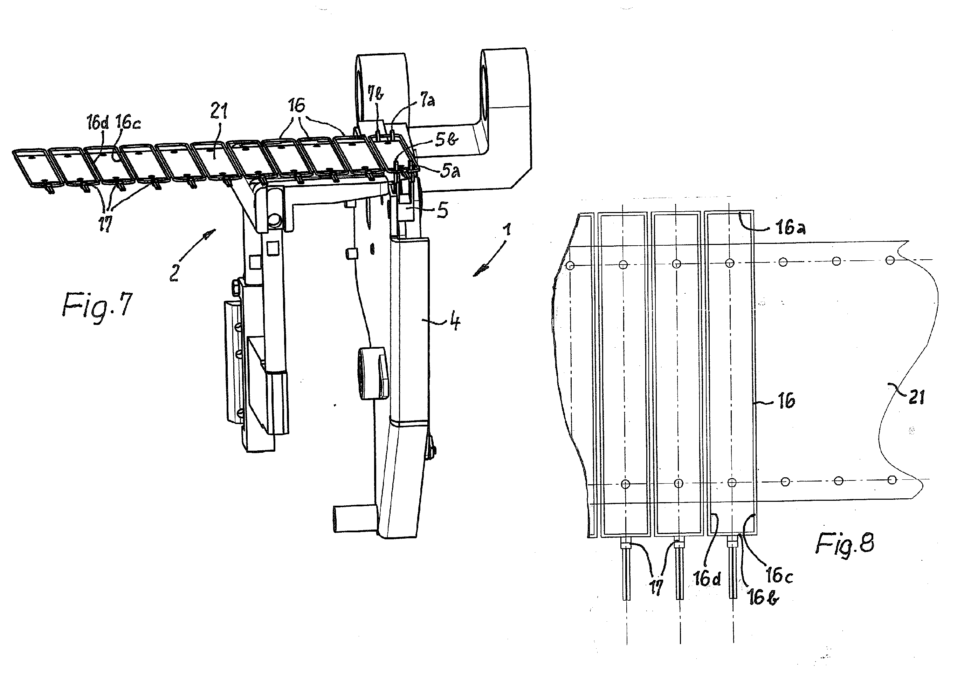

Die Vorrichtung zum Herstellen und Befestigen einer aus einer Aufhängeschlaufe gebildeten Würgeschlinge am Zopf einer zu diesem gerafften Schlauchverpackung, namentlich einer entsprechenden Wursthülle, besteht gemäß Figur 1 im Wesentlichen aus einem "Schlinger" 1 und einer Aufhängeschlaufen-Zuführeinrichtung 2. Im Beispiel ist die Vorrichtung insgesamt ein Zusatzgerät zu einer - nicht dargestellten - Verschließeinrichtung für solche Portionspackungen, die zum Zwecke der Handhabung und Aufbewahrung mit einer Aufhängeschlaufe versehen werden. Zu diesem Zweck ist der Schlinger 1 um die Achse 3 in die Verschließeinrichtung einschwenkbar, während die Zuführeinrichtung 2 in Richtung des Pfeiles B an den Schlinger 1 herangefahren werden kann (vgl. Figur 7).

Der Schlinger 1 weist eine plattenförmige Halterung 4 auf, auf der eine ortsfeste Haltegabel 5, eine um die Achse 6 schwenkbare Spanngabel 7 und ein einseitig befestigter, um die Achse 8 schwenkbarer Schlingfinger 9 von im Wesentlichen Teilkreisform angeordnet sind. Sowohl die Haltegabel 5 als auch die Spanngabel 7 ist zweizinking, wobei die Zinken 5a und b bzw. 7a und b senkrecht zu einer die Gabeln 5, 7 verbindenden Ebene stehen, und die Schwenkebene des Schlingfingers 9 liegt zwischen den von den Schenkeln 5a, 7a bzw. 5b, 7b bestimmten, zur vorgenannten Ebene senkrechte Ebenen.

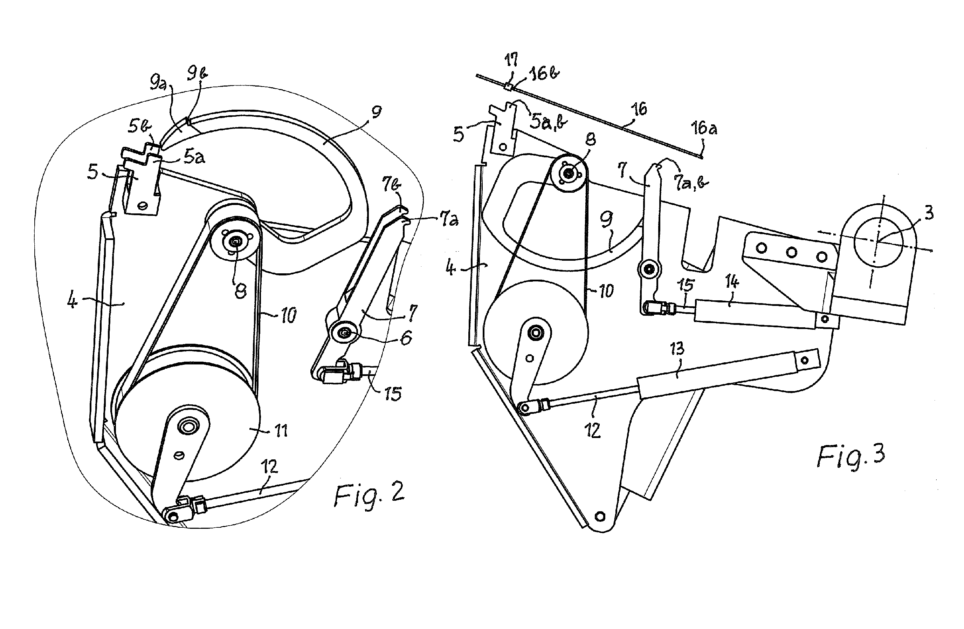

Der Schlingfinger 9, der sich in Figur 2 in einer teilweise eingeschwenkten Arbeits-Stellung befindet, erhält seinen Schwenkantrieb durch einen Riemen 10 von einer Antriebsscheibe 11, welche ihrerseits von der Kolbenstange 12 eines Stellzylinders 13 (Figur 3) betätigt wird. Ein ähnlicher Stellzylinder 14 verschwenkt mittels der Kolbenstange 15 die Spanngabel 7.

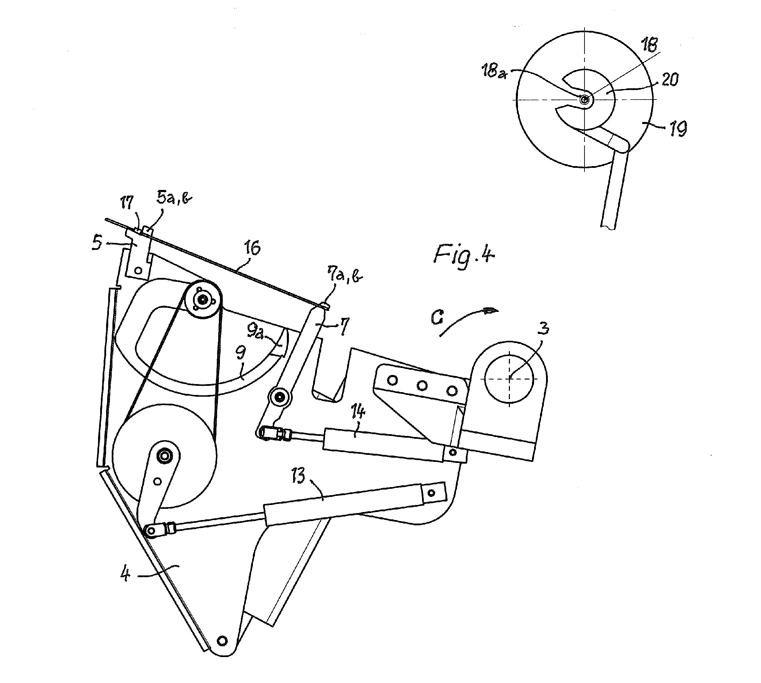

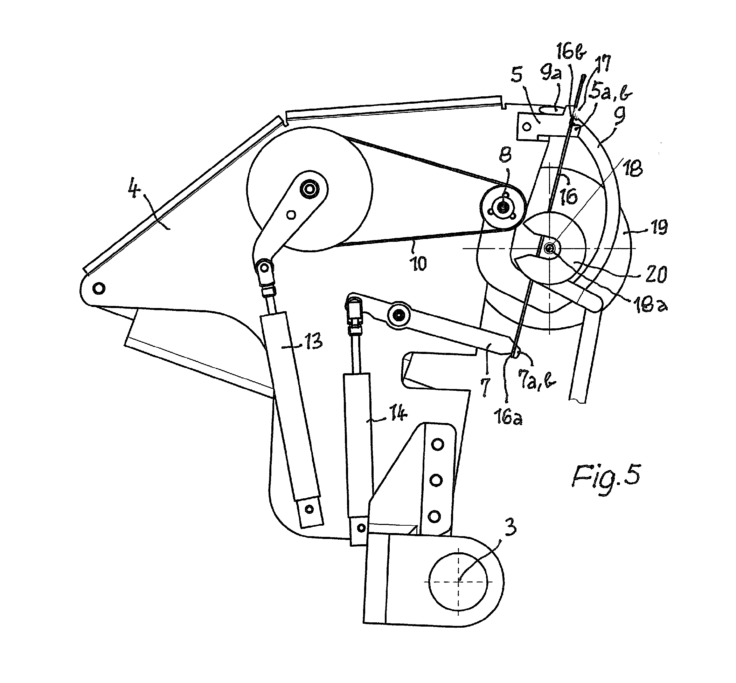

Figur 3 zeigt den Schlinger in einer schematischen Seitenansicht am Beginn eines Arbeitszyklus. Eine Aufhängeschlaufe 16, die durch einen Knoten 17, insbesondere einen Fischermannsknoten umfänglich geschlossen ist, wird in nicht näher dargestellter Weise (vgl. aber Figur 7) bereitgehalten. Dann wird die Halterung 4 um die Achse 3 nach oben geschwenkt, bis sich die Zinken 5a, 5b und 7a, 7b der Gabeln 5, 7 innerhalb der Aufhängeschlaufe 16 befinden. Hierauf wird der Zylinder 14 betätigt und schwenkt die Spanngabel 7 im Uhrzeigersinn, bis deren Zinken 7a, 7b das Ende 16a der Schlaufe 16 erfassen, während sich das andere Ende 16b der Aufhängeschlaufe 16 an die Zinken 5a, 5b anlegt und die Aufhängeschlaufe zwischen den beiden Gabeln 5, 7 in Rechteckform eingespannt wird; diesen Zustand zeigt Figur 4. Jetzt wird der Schlinger um die Achse 3 in Richtung des Pfeiles C gegen den anderweitig gebildeten und von einem Clip 18a verschlossenen Zopf 18 einer Schlauchpackung 19 geschwenkt, so dass sich die einspannte Aufhängeschlaufe 16 tangential zu diesem erstreckt. Diesen Zustand zeigt Figur 5, und zugleich mit dem Schlinger 1 wurde ein längsgeschlitzter Konus 20 (Figur 5 zeigt ihn von der axialen Seite seines größten Durchmessers) von der anderen Seite gegen den Zopf 18 geschwenkt und umschließt diesen derart, dass er im weiteren Verlauf des Arbeitszyklus für die gewünschte axiale Orientierung der Befestigung der Aufhängeschlaufe 16 am Zopf 18 sorgt.

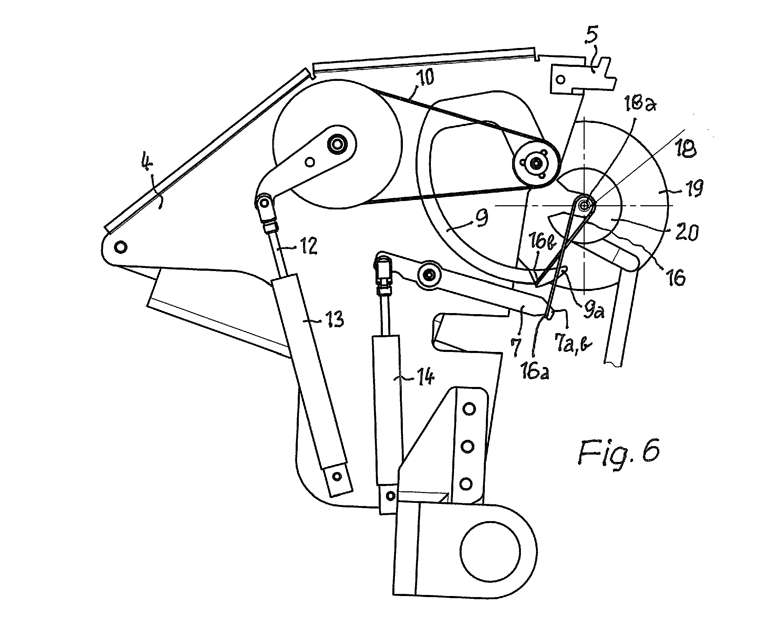

Das in Figur 5 dargestellte Stadium des Arbeitszyklus zeigt außerdem den gekrümmten Schlingfinger 9 am Ende seines vom Zylinder 13 bewirkten Ausschwenkvorganges durch die Innenfläche der Aufhängeschlaufe 16 hindurch bis zu jenem Punkt, in der seine verdickte Spitze 9a das Schlaufenende 16b von den Zinken 5a, 5b der Haltegabel 5 abgehoben und in dem hinter der Verdickung 9a gebildeten Haken 9b aufgenommen hat. Während des darauf beginnenden Rückschwenkens des Schlingfingers 9 übt der Kolben 15 des Zylinders 14 auf die Spanngabel 7 eine definierte Vorspannung aus, so dass die Aufhängeschlaufe 16 bei dem Rückschwenken des Schlingfingers 9 gespannt bleibt. Beim Rückschwenken unter Mitnahme des Endes 16b der Aufhängeschlaufe 16 legt sich diese um den Zopf 18, bis die Spitze 9a mit ihrem Haken 9b und dem daran lösbar befestigten Ende 16b der Aufhängeschlaufe 16 durch das von der Spanngabel 7 offengehaltene Ende 16a der Aufhängeschlaufe hindurch taucht und dabei, wie Figur 6 veranschaulicht, eine Würgeschlinge bildet. Durch weiteres Rückschwenken des Schlingfingers 9 unter gleichzeitigem Aufheben der Vorspannung am Ende 16a der Schlaufe 16 - was zum Schwenken der Spanngabel 7 entgegen dem Uhrzeigersinn und zur Freigabe des Endes 16a von ihren Zinken 7a, b führt - wird die Würgeschlinge zugezogen. Wenn dann der Schlinger 1 durch Abschwenken der Halterung 4 aus seiner Schlingerstellung (Figur 5, 6) in die Vorbereitungsstellung gemäß Figur 4 gelangt, löst sich auch das Ende 16b der Aufhängeschlaufe 16 aus dem Haken 9b des Schlingfingers 9 und die Aufhängeschlaufe ist mittels der Würgeschlinge endgültig am Zopf 18 befestigt.

Figur 7 veranschaulicht die Bereitstellung von Aufhängeschlaufen 16 gemäß Figur 2, jedoch bereits in der in Figur 4 dargestellten Stellung des Schlingers 1. Die Aufhängeschlaufen 16 sind gemäß Figur 8 nebeneinander auf einem Gurtband 21 derart befestigt, dass ihre Längsschenkel 16c und 16d parallel liegen, wobei die Breite des Gurtbandes 21 so gewählt ist, dass es von den Schlaufenenden 16a und 16b nur soweit überragt wird, dass die Zinken 5a, b bzw. 7a, b der Halte- und Spanngabeln 5, 7 sicher durch die jeweils von den Gurträndern und den diese überragenden Enden 16a, 16b der Schlaufen 16 umschlossenen Schlaufenöffnungen gelangen können. Die Darstellung der Aufhängeschlaufen 16 in den Figuren 1, 7 und 8 als Rechtecke ist schematisch zu verstehen, die Schlaufenenden 16a und 16b werden dort im Allgemeinen gerundet sein. Beim Aufspannen der Schlaufen 16 durch die Zinken der Halteund Spanngabeln 5, 7 jedoch entsteht eine länglich-schmale Rechteckform mit entsprechenden Rechteckenden 16a, 16b.

## Patentansprüche

1. Vorrichtung zum Befestigen einer Aufhängeschlaufe an einer zum Zopf gerafften Schlauchhülle, wobei auf einer Halterung (4) eine ortsfeste zweizinkige Haltegabel (5) und eine relativ zu dieser und senkrecht zu ihrer Zinkenebene bewegliche zweizinkige Spanngabel (7) sowie ein gekrümmter und einseitig befestigter Schlingfinger (9) angeordnet sind,
wobei die Zinken (5a, b; 7a, b) beider Gabeln (5, 7) im Wesentlichen senkrecht zu einer die Gabeln verbindenden Ebene stehen und die umfänglich geschlossene Aufhängeschlaufe (16) in Form eines länglich-schmalen Rechtecks zwischen sich aufspannen können, welches sich bei Beginn eines Befestigungszyklus' mit beiden Längsschenkeln (16c, d) tangential zum Zopf (18) erstreckt, **dadurch gekennzeichnet, dass** der Schlingfinger (9) auf einem Teilkreis schwenkbar angeordnet ist, und eine Hakenspitze (9b) hat, die sich bei seiner Schwenkbewegung aus seiner Ruhelage auf der dem Zopf (18) gegenüberliegenden Seite der Rechteckschlaufe durch diese nahe ihrem ersten von der Spanngabel gehaltenen Rechteckende (16a) hindurch um den Zopf (18) herum zum anderen (zweiten) Rechteckende (16b) bewegt, dieses von der Haltegabel (5) löst und es beim Rückschwenken um den Zopf und durch die Aufhängeschlaufe (16) am ersten Rechteckende (16a) mitnimmt, so dass eine die Aufhängeschlaufe (16) am Zopf (18) festlegende Würgeschlinge entsteht.

2. Vorrichtung nach Anspruch 1, **dadurch gekennzeichnet, dass** die Spanngabel (7) schwenkbar an der Halterung (4) angeordnet ist und die Aufhängeschlaufe (16) nach ihrem Aufspannen sowie bei der Mitnahme des zweiten Schlaufen-Rechteckendes (16b) durch den rückschwenkenden Schlingfinger (9) unter einer definierten Vorspannung hält, bis die Bildung der Würgeschlaufe abgeschlossen ist.

3. Vorrichtung nach Anspruch 1 oder 2, **dadurch gekennzeichnet, dass** die Hakenspitze des Schlingfingers (9) eine radiale Verdickung (9a) aufweist, die beim Durchschwenken der Haltegabel (5) die Aufhängeschlaufe (16) von deren Zinken (5a, b) abhebt und in den Haken (9b) gleiten lässt.

4. Vorrichtung nach einem der Ansprüche 1 bis 3, **dadurch gekennzeichnet, dass** die Halterung (4) an einer Clip-Verschließvorrichtung für Schlauchhüllenzöpfe (18) in deren Arbeitsbereich ein- und aus ihm heraus ausschwenkbar angeordnet ist.

5. Vorrichtung nach Anspruch 4, **dadurch gekennzeichnet, dass** an der Halterung (4) ein radial geschlitzter Konus (20) befestigt ist, der im eingeschwenkten Zustand der Halterung den Schlauchhüllenzopf (18) konzentrisch umfasst und die Würgeschlinge bei deren Zuziehen zum Clip (18a) hin gleiten lässt.

6. Vorrichtung nach einem der Ansprüche 1 bis 5, **gekennzeichnet durch** eine Einrichtung (2) zum Zuführen von magazinierten Aufhängeschlaufen (16) an die Halte- und Spanngabeln (5, 7).

7. Vorrichtung nach Anspruch 6, bei der die Zuführeinrichtung (2) ein Gurtband (21) aufweist, auf der insbesondere durch Fischermannsknoten (17) geschlossene Schlaufen (16) nebeneinander mit etwas beabstandeten parallelen Längsschenkeln (16c, d) lösbar befestigt sind und die Ränder des breiten Gurtbandes (21) mit ihren Stirnenden nur soweit überragen, dass die Zinken (5a, b; 7a, b) der Halte- und Spanngabeln (5, 7) in die freiliegenden Endabschnitte (16a, b) der Aufhängeschlaufen (16) einführbar sind.

## Claims

1. An apparatus for attaching a suspension loop to a tubular casing at a pinched section,
wherein a stationary two-pronged holding fork (5), a two-pronged tensioning fork (7) moveable relative thereto and perpendicular to the plane thereof, and a curved looping finger (9) attached on one side are disposed on a mount (4),
wherein the prongs (5a, b; 7a, b) of both forks (5, 7) stand substantially perpendicular to a plane connecting the forks and are able to stretch between them the closed suspension loop (16) in the shape of an elongated narrow rectangle, which extends at the start of an attachment cycle with both longitudinal sides (16c, d) tangential to the pinched section (18), **characterised in that** the looping finger (9) can be swivelled through an arc and has a hooked tip (9b) which moves during its swivelling movement from its resting position on the opposite side of the rectangular loop from the pinched section (18), through said rectangular loop near its first rectangular end (16a) held by the tensioning fork, around the pinched section (18) to the other (second) rectangular end (16b), releases the latter from the holding fork (5) and carries it along when swivelling backwards around the pinched section and through the suspension loop (16) at the first rectangular end (16a) to form a cow hitch knot which fixes the suspension loop (16) to the pinched section (18).

2. The apparatus according to claim 1, **characterised in that** the tensioning fork (7) is swivelably disposed on the mount (4) and keeps the suspension loop (16) under a defined initial tension, after the latter has been stretched and when the second rectangular end (16b) of the loop is being carried along by the looping finger (9) swiveling back, until formation of the cow hitch knot has been completed.

3. The apparatus according to claim 1 or 2, **characterised in that** the hooked tip of the looping finger (9) has a radial bulge (9a) which lifts the suspension loop (16) from the prongs (5a, b) of the holding fork (5) when swivelling through said prongs and which causes said suspension loop to slide into the hook (9b).

4. The apparatus according to any one of claims 1 to 3, **characterised in that** the mount (4) is disposed on, and within the operating area, of a clipping device for closing the pinched ends of tubular casings (18), such that the mount can be swivelled into and out of said operating area.

5. The apparatus according to claim 4, **characterised in that** a radially slotted cone (20) is attached to the mount (4), said cone concentrically surrounding the pinched end (18) of the tubular casing when the mount is swivelled into place, thus allowing the cow hitch knot to slide towards the clip (18a) when the knot is tightened.

6. The apparatus according to any one of claims 1 to 5, **characterised by** a device (2) for feeding suspension loops (16) in magazines to the holding and tensioning forks (5, 7).

7. The apparatus according to claim 6, said feeding device (2) having a belt (21) on which loops (16) closed in particular by fisherman's knots (17) are detachably attached alongside each other with their parallel longitudinal sides (16c, d) spaced slightly apart and protruding with their ends only so far beyond the edges of the wide belt (21) that the prongs (5a, b; 7a, b) of the holding and tensioning forks (5, 7) can be inserted into the open end sections (16a, b) of the suspension loops (16).

## Revendications

1. Dispositif de fixation d'une bride de suspension à une gaine formant boyau resserrée en une tresse,
dans lequel il est monté sur un support (4) une fourchette (5) de maintien à poste fixe à deux dents et, mobile par rapport à celle-ci et perpendiculairement à son plan de dents, une fourchette (7) de tension à deux dents, ainsi qu'un doigt (9) boucleur courbé et fixé d'un côté,
dans lequel les dents (5a, b; 7a, b) des deux fourchettes (5, 7) sont sensiblement perpendiculaires à un plan reliant les fourchettes et peuvent serrer entre elles les brides (16) de suspension fermées sur le pourtour et sous la forme d'un rectangle étroit oblong, lequel s'étend, au début d'un cycle de fixation, par les deux branches (16c, d) longitudinales tangentiellement à la tresse (18),
**caractérisé en ce que** le doigt (9) boucleur est monté pivotant sur un arc de cercle et a une pointe (9b) de crochet, qui, lors de son mouvement de pivotement, passe de sa position de repos, du côté de la bride rectangulaire opposé à la tresse (18), à travers cette bride à proximité de sa première extrémité (16a) de rectangle maintenue par la fourchette de tension, autour de la tresse (18), à l'autre (deuxième) extrémité (16b) du rectangle, la détache de la fourchette (5) de maintien et l'entraîne, lors du pivotement en retour autour de la tresse et à travers la bride (16) de suspension, à la première extrémité (16a) du rectangle de manière à créer une boucle torsadée fixant la bride (16) de suspension à la tresse (18).

2. Dispositif suivant la revendication 1, **caractérisé en ce que** la fourchette (7) de tension est montée pivotante sur le support (4) et, la bride (16) de suspension est, après son serrage ainsi que lors de l'entraînement de la deuxième extrémité (16b) rectangulaire de la bride par le doigt (9) boucleur pivotant en arrière, maintenue sous une précontrainte définie jusqu'à ce que la formation de la boucle torsadée soit terminée.

3. Dispositif suivant la revendication 1 ou 2, **caractérisé en ce que** la pointe du crochet du doigt (9) boucleur à un épaississement (9a) radial qui, lors du pivotement de la fourchette (5) de maintien, soulève la bride (16) de suspension de ses dents (5a, 5b) et la fait glisser dans le crochet (9b).

4. Dispositif suivant l'une des revendications 1 à 3, **caractérisé en ce que** le support (4) est monté, de manière à pouvoir y rentrer en pivotant et en sortir, sur un dispositif de fermeture d'agrafe pour des tresses (18) de gaine de boyau dans sa zone de travail.

5. Dispositif suivant la revendication 4, **caractérisé en ce que** sur le support (4) est fixé un cône (20) fendu radialement qui, lorsque le support est à l'état rentré, entoure concentriquement la tresse (18) de la gaine de boyau et laisse glisser la boucle torsadée lorsqu'elle est tirée vers l'agrafe (18a).

6. Dispositif suivant l'une des revendications 1 à 5, **caractérisé par** un dispositif (2) pour apporter des brides (16) de suspension emmagasinées aux fourchettes (5, 7) de maintien et de tension.

7. Dispositif suivant la revendication 6, dans lequel le dispositif (2) d'apport a une courroie (21) sur laquelle sont fixées, de manière détachable les unes à côté des autres en ayant des branches (16c, d) longitudinales parallèles un peu à distance, des brides (16) fermées notamment par des noeuds (17) de pêcheur et les bords de la courroie (21) large ne dépassent par ses extrémités frontales que jusqu'à ce que les dents (5a, b; 7a, b) des fourchettes (5, 7) de maintien et de tension puissent être introduites dans les parties (16a, b) d'extrémité dégagées des brides (16) de suspension.
